# EUROPÄISCHE PATENTANMELDUNG

(11) **EP 3 685 991 A1**
(43) Veröffentlichungstag der Anmeldung: **29.07.2020**
(21) Anmeldenummer: 19153483.3
(22) Anmeldetag: 24.01.2019
(51) Int. Cl.: B29C 64/153, B29C 64/393, B33Y 50/02, B33Y 10/00, B22F 3/105

(54) **HERSTELLEN EINES BAUTEILS**

(71) Anmelder: Siemens Aktiengesellschaft, 80333 München (DE)
(72) Erfinder: Geisen, Ole, 10781 Berlin (DE)

(57) **Zusammenfassung**

Die Erfindung betrifft ein Verfahren zum Herstellen eines Bauteils (10), bei dem:
- auf eine Oberfläche (14) des Bauteils (10) eine Schicht (16) aus einem pulverförmigen Werkstoff (22) aufgebracht wird,
- ein Energiestrahl (18) über die Oberfläche (14) geführt wird,
- aufgrund des Einwirkens des Energiestrahls (18) abgegebene elektromagnetische Strahlung (26) mittels eines Strahlungssensors (28) erfasst wird,
- ein Sensorsignal (30) ausgewertet wird, um einen Defekt (32) des erstarrten Werkstoffs (64) zu ermitteln,
- der Werkstoff in einem den Defekt (32) umfassenden Defektbereich (38) mittels des Energiestrahls (18) aufgeschmolzen wird, wobei der wenigstens eine vorgegebene Betriebsparameter verändert wird,
- die von dem Defektbereich (38) abgegebene elektromagnetische Strahlung (26) erfasst wird,
- für das erneute Aufschmelzen wenigstens ein zweiter Prozessvergleichswert (40, 42) vorgegeben wird,
- das Sensorsignal (30) in einem zweiten Vergleich mit dem wenigstens einen zweiten Prozessvergleichswert (40, 42) verglichen wird, um zu ermitteln, ob der Defekt (32) behoben ist.

## Beschreibung

Die Erfindung betrifft ein Verfahren zum Herstellen eines Bauteils, bei dem auf eine von einer Aufbauzone umfassten Oberfläche des Bauteils oder eines Bauteilträgers eine Schicht aus einem pulverförmigen Werkstoff aufgebracht wird, ein Energiestrahl abhängig von wenigstens einem vorgegebenen Betriebsparameter zumindest teilweise über die Oberfläche geführt wird, um zumindest den pulverförmigen Werkstoff der Schicht in einem Bereich des Energiestrahls aufzuschmelzen, wobei der aufgeschmolzene Werkstoff nach Abklingen des Einwirkens des Energiestrahls erstarrt, während des Einwirkens des Energiestrahls auf den Werkstoff aus dem Bereich abgegebene elektromagnetische Strahlung mittels eines Strahlungssensors erfasst wird und ein Sensorsignal des Strahlungssensors ausgewertet wird, um einen Defekt des erstarrten Werkstoffs zu ermitteln, zu welchem Zweck das Sensorsignal in einem ersten Vergleich mit wenigstens einem ersten Prozessvergleichswert verglichen wird. Die Erfindung betrifft ferner eine Steuereinrichtung für eine Vorrichtung zum Herstellen eines Bauteils, wobei die Steuereinrichtung ausgebildet ist, das Aufbringen von einer Schicht aus einem pulverförmigen Werkstoff auf eine von einer Aufbauzone umfassten Oberfläche des Bauteils oder eines Bauteilträgers durch eine Aufbringvorrichtung zu steuern, das Führen eines Energiestrahls zumindest teilweise über die Oberfläche mittels einer Energiestrahlvorrichtung abhängig von wenigstens einem vorgebbaren Betriebsparameter zu steuern, um zumindest den pulverförmigen Werkstoff der Schicht im Bereich des Energiestrahls aufzuschmelzen, wobei der aufgeschmolzene Werkstoff nach Abklingen des Einwirkens des Energiestrahls erstarrt, während des Einwirkens des Energiestrahls auf den Werkstoff aus dem Bereich abgegebene elektromagnetische Strahlung mittels eines Strahlungssensors zu erfassen, ein Sensorsignal des Strahlungssensors auszuwerten, um einen Defekt des erstarrten Werkstoffs zu ermitteln, zu welchem Zweck die Steuereinrichtung ausgebildet ist, das Sensorsignal in einem ersten Vergleich mit wenigstens einem ersten Prozessvergleichswert zu vergleichen.

Verfahren der gattungsgemäßen Art sowie entsprechende Steuereinrichtungen sind im Stand der Technik umfänglich bekannt, sodass es eines gesonderten druckschriftlichen Nachweises hierfür nicht bedarf. Sie dienen insbesondere der Anfertigung von Beschichtungen aus dem pulverförmigen Werkstoff, dem Herstellen vollständiger Bauteile, dem Herstellen von Teilen der Bauteile und/oder dergleichen. Hierdurch lassen sich Selective Laser Melting (SLM)-Prozesse realisieren, die insbesondere auch im Bereich der additiven Verfahrensführung zum Einsatz kommen können.

Als additives Herstellverfahren können dem Grunde nach unterschiedliche Verfahren zum Einsatz kommen, beispielsweise ein Sinter- oder Pulverdruckverfahren, ein Drucken mit extrudierten Baumaterialien, eine Stereolithografie und/oder dergleichen. Insbesondere eignen sich als additives Herstellungsverfahren ein 3D-Drucken mit Pulver (3DB), selektives Lasersintern (SLS), selektives Laserschmelzen (SLM) oder dergleichen. Bezüglich der Herstellverfahren wird ergänzend auf 3D-Drucken von Petra Fastermann verwiesen, Verlag Springer Vieweg, 2014.

Während des Herstellens des Bauteils kann das Problem auftreten, dass nach dem Erstarren des mittels des Energiestrahls verflüssigten pulverförmigen Werkstoffs ein Defekt in dem erstarrten Werkstoff auftritt, beispielsweise ein Riss, eine Unebenheit, die einen vorgegebenen Wert überschreitet, Kombinationen hiervon und/oder dergleichen. Diese Defekte können dazu führen, dass das Bauteil insgesamt für seinen bestimmungsgemäßen Gebrauch beeinträchtigt ist beziehungsweise für den bestimmungsgemäßen Gebrauch nicht geeignet ist. Es ist daher wünschenswert, einen derartigen Defekt erkennen zu können und zu beheben, um damit die bestimmungsgemäße Gebrauchstauglichkeit des Bauteils insgesamt zu gewährleisten. Um den Defekt erkennen zu können, sind unterschiedliche Systeme beziehungsweise Monitoring-Systeme verfügbar, beispielsweise ein Diodensystem oder dergleichen. Solche Systeme beinhalten jedoch derzeit keine Möglichkeiten zur Durchführung eines Reparaturprozesses, um den Defekt zu beheben.

Aus der DE 10 2015 212 420 A1 ist eine Vorrichtung zur additiven Fertigung eines Bauteils bekannt. Diese Vorrichtung widmet sich der Aufgabe, den Verbrauch des pulverförmigen Werkstoffs bei der Fertigung beziehungsweise Herstellung des Bauteils zu verringern, insbesondere wenn es sich um kleine Bauteile handelt. Die Problematik eines Defekts ist hier nicht behandelt.

Der Erfindung liegt die Aufgabe zugrunde, eine Möglichkeit zu eröffnen, einen erkannten Defekt zu beheben.

Als Lösung werden mit der Erfindung ein Verfahren und eine Steuereinrichtung gemäß den unabhängigen Ansprüchen vorgeschlagen.

Vorteilhafte Weiterbildungen ergeben sich anhand von Merkmalen der abhängigen Ansprüche.

Bezüglich eines gattungsgemäßen Verfahrens wird insbesondere vorgeschlagen, dass der Werkstoff in einem den Defekt umfassenden Defektbereich mittels des Energiestrahls aufgeschmolzen wird, zu welchem Zweck der wenigstens eine vorgegebene Betriebsparameter verändert wird, die von dem Defektbereich abgegebene elektromagnetische Strahlung mittels des Strahlungssensors erfasst wird, für das erneute Aufschmelzen wenigstens ein zweiter Prozessvergleichswert vorgegeben wird, und das Sensorsignal in einem zweiten Vergleich mit dem wenigstens einen zweiten Prozessvergleichswert verglichen wird, wobei abhängig von dem zweiten Vergleich ermittelt wird, ob der Defekt behoben ist.

Bezüglich einer gattungsgemäßen Steuereinrichtung wird insbesondere vorgeschlagen, dass die Steuereinrichtung ausgebildet ist, den Werkstoff in einem den Defekt umfassenden Defektbereich mittels des Energiestrahls aufzuschmelzen, zu welchem Zweck der wenigstens eine vorgegebene Betriebsparameter verändert wird, die von dem Defektbereich abgegebene elektromagnetische Strahlung mittels des Strahlungssensors zu erfassen, für das erneute Aufschmelzen wenigstens einen zweiten Prozessvergleichswert vorzugeben, und das Sensorsignal in einem zweiten Vergleich mit dem wenigstens einen zweiten Prozessvergleichswert zu vergleichen, um abhängig von dem zweiten Vergleich zu ermitteln, ob der Defekt behoben ist.

Die Erfindung nutzt beispielsweise den SLM-Prozess, den SLS-Prozess oder dergleichen und basiert auf dem Gedanken, dass die ausgesandte Strahlung zur Qualitätssicherung, insbesondere zum Ermitteln des Defekts genutzt werden kann, weil sich mit einer geeigneten Sensorik Rückschlüsse von der erfassten elektromagnetischen Strahlung auf physikalische Eigenschaften des Werkstoffs ziehen lassen, beispielsweise eine Schmelzbadgröße, eine Wärmeabfuhr aus dem Schmelzbad, Oberflächenbeschaffenheiten und/oder dergleichen. Durch den ersten Vergleich kann somit auf einfache Weise der Defekt, oder, wenn mehrere Defekte vorhanden sind, die Defekte, ermittelt werden. Dabei wird ferner ausgenutzt, dass ein jeweiliger Defekt eine hiervon abhängige Veränderung der ausgesandten elektromagnetischen Strahlung zur Folge haben kann. Durch eine, vorzugsweise positionsselektive, Erfassung der ausgesandten elektromagnetischen Strahlung kann im Rahmen des ersten Vergleichs somit auf einfache Weise ein jeweiliger Defekt ermittelt werden.

Ist ein Defekt ermittelt worden, kann er, vorzugsweise mit der gleichen Herstellvorrichtung, durch ein erneutes Aufschmelzen behoben werden. Zu diesem Zweck wird ein Defektbereich ermittelt, der den Defekt umfasst. Zum Ermitteln des Defektbereichs kann die Steuereinrichtung zum Beispiel eine Bereichsermittlungseinheit umfassen, die geometrische Abmessungen des Defekts und abhängig hiervon den Defektbereich ermittelt. Dies kann unter Nutzung einer programmgesteuerten Rechnereinheit erfolgen. Der Defektbereich kann dann durch den Energiestrahl angefahren werden, um den Werkstoff im Defektbereich aufzuschmelzen.

Es wurde weiterhin gefunden, dass der wenigstens eine vorgegebene Betriebsparameter für das erneute Aufschmelzen im Defektbereich zweckmäßigerweise verändert wird, weil für das Beheben des Defekts andere Eigenschaften des Energiestrahls relevant beziehungsweise förderlich sein können. Beispielsweise hat es sich gezeigt, dass der erstarrte Werkstoff eine höhere Reflektion als der pulverförmige Werkstoff aufweisen kann. Dadurch kann eine Absorption von durch den Energiestrahl bereitgestellter Energie geringer als beim pulverförmigen Werkstoff ausfallen. Andererseits kann es förderlich sein, den Werkstoff lediglich bis zu einer geringeren Tiefe als bei der Herstellung der Schicht vorgesehen aufzuschmelzen, um Auswirkungen auf den Gesamtverbund des bisher hergestellten Teils des Bauteils in der Aufbauzone möglichst gering zu halten. Weitere Auswirkungen können entsprechend zu berücksichtigen sein.

Insgesamt nutzt die Erfindung also die Erkenntnis, dass für die Reparatur beziehungsweise die Behebung des Defekts spezifisch angepasste Betriebsparameter für den Energiestrahl förderlich sein können. Dadurch kann die Behebung des Defekts nicht nur verbessert werden, sondern es kann auch eine schnellere Reparatur beziehungsweise Behebung des Defekts erreicht werden.

Der Energiestrahl ist vorzugsweise ein Laserstrahl. Er kann jedoch auch ein Elektronenstrahl, ein Ionenstrahl und/oder dergleichen sein. Der Energiestrahl ist vorzugsweise an Eigenschaften des Werkstoffs angepasst ausgebildet, sodass eine möglichst gute bestimmungsgemäße Herstellung des Bauteils erreicht werden kann. Eine Leistung des Energiestrahls ist vorzugsweise angepasst an die Schicht und/oder den Werkstoff gewählt. Der Energiestrahl kann beispielsweise einen Durchmesser von etwa 10 µm bis etwa 1000 pm, vorzugsweise etwa 40 µm bis etwa 80 µm aufweisen.

Zu diesem Zweck kann eine Energiestrahlvorrichtung vorgesehen sein, die es erlaubt, den Energiestrahl in vorgebbarer Weise bereitzustellen und über die Oberfläche zu führen. Die Energiestrahlvorrichtung kann geeignete Ablenkungsmittel für den Energiestrahl aufweisen, sodass ein Führen des Energiestrahls gemäß einem vorgebbaren Weg erreicht werden kann. Bei einem Laserstrahl können diesbezüglich beispielsweise optisch aktive Elemente vorgesehen sein, beispielsweise Spiegel, Linsen, Prismen und/oder dergleichen. Handelt es sich bei dem Energiestrahl um einen Elektronenstrahl oder einen Ionenstrahl, können entsprechende Führungseinrichtungen basierend auf der Nutzung von elektrischen und/oder magnetischen Feldern vorgesehen sein, um die gewünschte Führung des Energiestrahls erreichen zu können.

Der wenigstens eine vorgebbare Betriebsparameter kann zum Beispiel eine Strahlungsleistung, eine Scangeschwindigkeit und/oder dergleichen sein. Darüber hinaus kann der wenigstens eine Betriebsparameter natürlich auch eine Frequenz, eine Feldstärkenamplitude und/oder dergleichen sein. Es braucht also nicht lediglich ein einziger Betriebsparameter vorgesehen zu sein, um die Herstellung des Bauteils realisieren zu können. Es können natürlich auch weitere Betriebsparameter vorgesehen sein. Darüber hinaus ist es nicht erforderlich, wenn mehrere Betriebsparameter vorgesehen sind, sämtliche der Betriebsparameter entsprechend zu verändern. Es kann auch vorgesehen sein, dass lediglich ein einziger oder nur einige von mehreren Betriebsparametern entsprechend verändert werden, um die gewünschte Funktion erreichen zu können.

Mittels des Strahlungssensors kann die elektromagnetische Strahlung, die insbesondere aus dem Bereich aufgrund des Einwirkens des Energiestrahls auf den Werkstoff abgegeben wird, erfasst werden. Der Strahlungssensor ist hierzu vorzugsweise angepasst ausgebildet. Darüber hinaus kann der Strahlungssensor natürlich auch ausgebildet sein, weitere Eigenschaften der abgegebenen elektromagnetischen Strahlung zu erfassen, beispielsweise von der Temperatur abhängige Strahlung und/oder dergleichen. Diese Rückstrahlung kann dazu dienen, den Defekt im erstarrten Werkstoff zu ermitteln. Zu diesem Zweck wird das Sensorsignal im ersten Vergleich mit wenigstens einem ersten Prozessvergleichswert verglichen. Abhängig von dem Vergleich kann dann der Defekt ermittelt werden.

Für das Durchführen der Reparatur des Defekts wird der Werkstoff im Defektbereich mittels des Energiestrahls erneut aufgeschmolzen. Hierzu wird der wenigstens eine vorgegebene Betriebsparameter verändert, damit das Aufschmelzen möglichst optimal erfolgt, sodass der Defekt vorzugsweise mit einem einzigen Aufschmelzen behoben werden kann.

Um nun zu ermitteln, ob der Defekt auch behoben ist, wird die von dem Defektbereich abgegebene elektromagnetische Strahlung mittels des Strahlungssensors erfasst. Ferner wird für den zweiten Vergleich ein zweiter Prozessvergleichswert vorgegeben. Das entsprechend der erfassten elektromagnetischen Strahlung vom Strahlungssensor abgegebene Sensorsignal wird mittels des zweiten Vergleichs mit dem zweiten Prozessvergleichswert verglichen, wobei abhängig von dem zweiten Vergleich ermittelt werden kann, ob der Defekt behoben ist. Sollte der Defekt noch nicht behoben sein, so kann ein erneutes Aufschmelzen des Werkstoffs im Defektbereich mittels des Energiestrahls erreicht werden, wobei dann der wenigstens eine vorgegebene Betriebsparameter nochmals verändert werden kann.

Das Verändern des wenigstens einen vorgegebenen Betriebsparameters kann zum Beispiel in einer Datenbank gespeichert werden, damit, beispielsweise abhängig von der Art des erfassten Defekts, eine entsprechende Variation des wenigstens einen vorgegebenen Betriebsparameters vorgenommen werden kann, um möglichst mit einer einzigen erneuten Aufschmelzung des Defektbereichs das Beheben des Defekts erreichen zu können. Insgesamt kann hierdurch eine stetige Verbesserung der erfindungsgemäßen Verfahrensführung beziehungsweise Prozessführung erreicht werden.

Es wird ferner vorgeschlagen, dass der erste und/oder der zweite Prozessvergleichswert einen oberen und einen unteren Prozessvergleichswert umfassen, wobei das Sensorsignal sowohl mit dem oberen als auch mit dem unteren Prozessvergleichswert verglichen wird, um zu ermitteln, ob ein Wert des Sensorsignals zwischen dem oberen und dem unteren Prozessvergleichswert ist. Hierdurch kann eine Prozessführung in einem vorgegebenen Wertebereich erreicht werden, der durch den jeweiligen oberen und unteren Prozessvergleichswert bestimmt ist. Dadurch kann erreicht werden, dass die mit dem Verfahren der Erfindung hergestellte Schicht eine vorgegebene Eigenschaft innerhalb vorgegebener Eigenschaftswerte aufweist. Die Verfahrensführung und das Herstellverfahren können dadurch weiter verbessert werden.

Ferner wird vorgeschlagen, dass ein kleinerer Wert des Sensorsignals als der untere Prozessvergleichswert und/oder ein größerer Wert des Sensorsignals als der obere Prozessvergleichswert als Defekt ermittelt wird. Auf diese Weise kann der Defekt auf einfache Weise ermittelt werden, indem nämlich lediglich geprüft zu werden braucht, ob der Wert des Sensorsignals in einem vorgegebenen Wertebereich beziehungsweise Toleranzband ist. Der Wertebereich kann je nach gewünschter Eigenschaft der Schicht auch schichtweise variieren. Zu diesem Zweck können die Prozessvergleichswerte nahezu individuell vorgegeben werden und gegebenenfalls auch mit dem Herstellfortschritt geändert werden.

Weiterhin wird vorgeschlagen, dass das Verfahren für jede Schicht erneut durchgeführt wird. Dadurch kann erreicht werden, dass das gesamte Bauteil mit dem erfindungsgemäßen Verfahren hergestellt werden kann. Natürlich braucht das Verfahren dem Grunde nach auch nur für eine jeweilige ausgewählte Schicht angewendet zu werden. Um jedoch die Vorteile des erfindungsgemäßen Verfahrens für das gesamte Bauteil oder größere Teile hiervon nutzen zu können, ist die Wiederholung des Verfahrens vorteilhaft.

Es wird ferner vorgeschlagen, dass der wenigstens eine vorgegebene Betriebsparameter abhängig von dem Werkstoff verändert wird. Dadurch kann der Energiestrahl möglichst gut an Werkstoffeigenschaften angepasst werden, sodass eine optimierte Verfahrensführung erreicht werden kann. Beispielsweise kann vorgesehen werden, dass eine Leistung des Energiestrahls und/oder die Scangeschwindigkeit an Eigenschaften des Werkstoffs angepasst wird. Ist der pulverförmige Werkstoff zum Beispiel aus einem Keramikmaterial gebildet, kann es erforderlich sein, eine große Leistung mit dem Energiestrahl bereitzustellen. Ist der pulverförmige Werkstoff hingegen beispielsweise ein Kunststoff, kann bereits eine kleine Leistung des Energiestrahls für die gewünschte Verfahrensführung ausreichen. Natürlich kann, insbesondere auch wenn Schichten aus unterschiedlichen Werkstoffen gebildet werden sollen, der wenigstens eine vorgegebene Betriebsparameter abhängig vom Werkstoff entsprechend angepasst werden, um eine möglichst gute Ausbildung der jeweiligen Schicht erreichen zu können.

Gemäß einer Weiterbildung wird vorgeschlagen, dass der wenigstens eine vorgegebene Betriebsparameter abhängig von einer Differenz zwischen dem Prozessvergleichswert und dem Wert des Sensorsignals verändert wird. Das Verändern des Betriebsparameters kann auf diese Weise zum Beispiel abhängig von sich ändernden Werkstoffeigenschaften entsprechend angepasst werden. Hier kann eine zumindest teilweise automatisierte Verfahrensführung erreicht werden, sodass vorzugsweise zu jedem Zeitpunkt der Verfahrensführung der Energiestrahl möglichst an den jeweils aktuell zu verarbeitenden pulverförmigen Werkstoff angepasst eingestellt ist. Das Verändern des Betriebsparameters kann für jede Schicht separat vorgesehen sein. Natürlich kann auch vorgesehen sein, dass der wenigstens eine Betriebsparameter auch bei der Herstellung einer einzelnen Schicht bereits verändert wird, wenn nämlich die Schicht keinen homogenen pulverförmigen Werkstoff aufweist. Dadurch können auch graduelle Variationen der Schicht als solcher Erreicht werden. Zu diesem Zweck kann der Betriebsparameter bereits während der erfindungsgemäßen Verfahrensführung bedarfsgerecht angepasst werden, indem er abhängig von der Differenz zwischen dem Prozessvergleichswert und dem Wert des Sensorsignals verändert wird.

Gemäß einer Weiterbildung wird vorgeschlagen, dass der wenigstens eine vorgegebene Betriebsparameter abhängig von einer Dicke der Schicht verändert wird. Die Dicke der Schicht kann für das Beheben des Defekts relevant sein. Um den Defektbereich aufzuschmelzen damit der Defekt behoben werden kann, sollte die mit dem Energiestrahl bereitgestellte Leistung an die Schichtdicke angepasst sein, sodass möglichst nur die Schicht, in der der Defekt aufgetreten ist, aufgeschmolzen zu werden braucht. Dadurch können Einwirkungen auf weitere Bereiche des Bauteils weitgehend vermieden werden. Die Dicke der Schicht kann zum Beispiel etwa 40 µm bis etwa 250 µm betragen. Je nach Anwendung können jedoch auch kleinere oder größere Dicken der Schicht vorgesehen sein.

Es wird weiterhin vorgeschlagen, dass der wenigstens eine vorgegebene Betriebsparameter von einer Datenbank bereitgestellt wird. Zu diesem Zweck kann die Steuereinrichtung mit der Datenbank kommunikationstechnisch gekoppelt sein, beispielsweise über ein Kommunikationsnetzwerk wie dem Internet oder dergleichen. Die Datenbank kann für unterschiedlichste Betriebsszenarien Daten bezüglich des wenigstens einen Betriebsparameters umfassen. Natürlich kann auch vorgesehen sein, dass während der bestimmungsgemäßen Verfahrensführung anfallende Daten der Datenbank zum Speichern zur Verfügung gestellt werden. Auf diese Weise kann eine umfangreiche Datenbank erreicht werden, sodass eine schnelle und zuverlässige Prozessführung zur Herstellung des Bauteils erreicht werden kann. Eine Genauigkeit der Prozessführung kann verbessert werden.

Weiterhin kann vorgesehen sein, dass das Aufschmelzen des Defektbereichs zu einem vorgegebenen Zeitpunkt und/oder abhängig von einem Fortschritt des Herstellens des Bauteils erfolgt. Dadurch kann insgesamt eine optimierte Herstellung des Bauteils erreicht werden, weil das Beheben des Defekts den eigentlichen Prozessführungsfortschritt zur Herstellung einer Schicht des Bauteils möglichst wenig stören zu braucht. Es kann beispielsweise vorgesehen sein, dass das Beheben des Defekts erst dann erfolgt, wenn die Schicht in vorgegebener Weise bearbeitet ist. Somit kann der Defekt dann behoben werden, bevor erneut pulverförmiger Werkstoff auf die die Aufbauzone bildende Oberfläche aufgebracht wird. Darüber hinaus kann natürlich auch vorgesehen sein, dass der Defekt dann behoben wird, wenn der Energiestrahl über eine vorgegebene Strecke geführt worden ist. Wird beispielsweise die Schicht nach Art von einer oder mehrerer Zeilen mittels des Energiestrahls bearbeitet, kann vorgesehen sein, dass das Beheben des Defekts dann erfolgt, wenn das Bearbeiten einer einzelnen Zeile durch den Energiestrahl beendet ist. Dabei kann dann der wenigstens eine vorgegebene Betriebsparameter für das Beheben des Defekts kurzzeitig geändert werden, bevor dann nach dem Beheben des Defekts die nächste Zeile mit dem Energiestrahl in vorgegebener Weise bearbeitet wird.

Die für das erfindungsgemäße Verfahren angegebenen Vorteile und Wirkungen gelten natürlich auch gleichermaßen für die erfindungsgemäße Steuereinrichtung und umgekehrt. Insbesondere können für Verfahrensmerkmale auch Vorrichtungsmerkmale formuliert sein und umgekehrt.

Weitere Merkmale, Vorteile und Funktionen können der folgenden Beschreibung von Ausführungsbeispielen anhand der Figuren entnommen werden. In den Figuren bezeichnen gleiche Bezugszeichen gleiche Merkmale und Funktionen.

Es zeigen:
- FIG 1: in einer schematischen Darstellung die Herstellung eines Bauteils gemäß einem selektiven Laserschmelzverfahren (SLM);
- FIG 2: eine schematischen Darstellung des gemäß FIG 1 bearbeiteten Bauteils durch visuelle Erfassung mit einem Strahlungssensor für sichtbares Licht;
- FIG 3: eine schematischen Darstellung wie FIG 2, jedoch nun mit einem Strahlungssensor, der im nahen Infrarotbereich sensitiv ist;
- FIG 4: eine schematische Diagrammdarstellung der sensitiven spektralen Bereiche in Bezug zur Laserstrahlung bei der Bearbeitung des Bauteils gemäß FIG 1;
- FIG 5: ein schematisches Spannungs-Zeitdiagramm, in dem ein Sensorsignal, das mit dem Strahlungssensor gemäß FIG 2 oder 3 erfasst wurde, in Bezug auf Prozessgrenzen dargestellt ist;
- FIG 6: eine schematische Diagrammdarstellung von Datenpunkten, bei denen das Signal gemäß FIG 5 mit einer oberen und einer unteren Prozessgrenze verglichen worden ist;
- FIG 7: eine detailliertere schematische Darstellung für einen Herstellprozess des Bauteils gemäß dem Verfahren nach FIG 1;
- FIG 8: eine schematische Darstellung wie FIG 7 bei Behebung eines ermittelten Defekts;
- FIG 9: eine schematische Diagrammdarstellung wie FIG 5, jedoch nun für ein Sensorsignal während der Behebung des Defekts gemäß FIG 8;
- FIG 10: einen schematische Darstellung wie FIG 6 für das Szenario gemäß FIG 9;
- FIG 11: eine schematische Darstellung einer Herstellvorrichtung zur Durchführung des Verfahrens gemäß den FIG 1, 7 und 8;
- FIG 12: eine schematische Darstellung wie FIG 2, 3, bei der ein Defekt ermittelt wurde;
- FIG 13: eine schematische Diagrammdarstellung wie FIG 5, bei der Prozessgrenzen für die Behebung des Defekts verändert worden sind; und
- FIG 14: eine schematische Diagrammdarstellung wie FIG 6 für das Sensorsignal gemäß FIG 13.

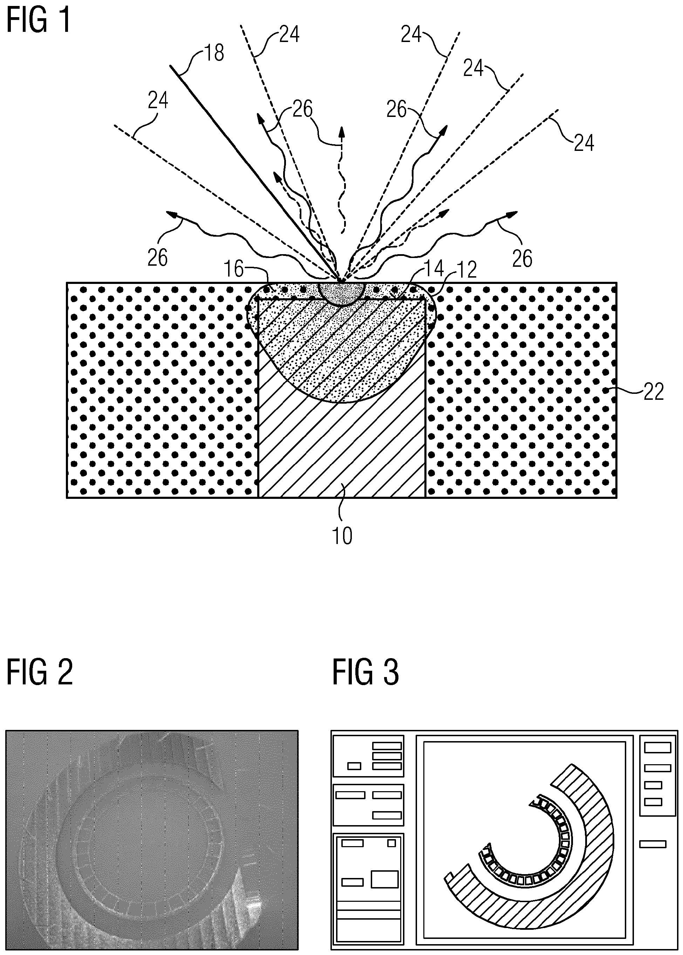

FIG 1 zeigt in einer schematischen Darstellung die grundlegende Situation bei der Herstellung eines Bauteils 10 gemäß einem SLM-Prozess, bei dem auf eine von einer Aufbauzone 12 umfasste Oberfläche 14 des Bauteils 10 eine Schicht 16 aus einem pulverförmigen Werkstoff 22 aufgebracht wird. FIG 1 zeigt ferner einen Energiestrahl 18, der vorliegend ein Laserstrahl ist, abhängig von einem zwei vorgegebenen Betriebsparametern, hier eine Leistung und eine Scangeschwindigkeit, teilweise über die Oberfläche 14 geführt wird, um den pulverförmigen Werkstoff 22 der Schicht 16 in einem Bereich 20 des Energiestrahls 18 aufzuschmelzen. Nach Abklingen des Einwirkens des Energiestrahls 18 erstarrt der Werkstoff und bildet vorliegend eine feste Schicht auf der Oberfläche 14 des Bauteils 10. Diese Schicht bildet sodann eine neue Oberfläche 14, auf die in einem folgenden Verfahrensschritt erneut pulverförmiger Werkstoff 22 aufgebracht wird, um eine weitere Schicht 16 hieran aufzubringen. Derartige Herstellverfahren werden auch selektives Laserschmelzen (Englisch: selective laser melting; SML), Laserpulverbettfusion (Englisch: laser powder bed fusion; SPBF) oder dergleichen genannt.

Aufgrund des Einwirkens des Energiestrahls 18 auf den Werkstoff wird aus dem Bereich 20 elektromagnetische Strahlung 24, 26 abgegeben. Ein Teil des Energiestrahls 18 wird reflektiert und als reflektierte elektromagnetische Strahlung 24 abgegeben. Ein anderer Teil der abgegebenen elektromagnetischen Strahlung ist abhängig von Werkstoffeigenschaften, Temperatur und/oder dergleichen und wird mit dem Bezugszeichen 26 bezeichnet.

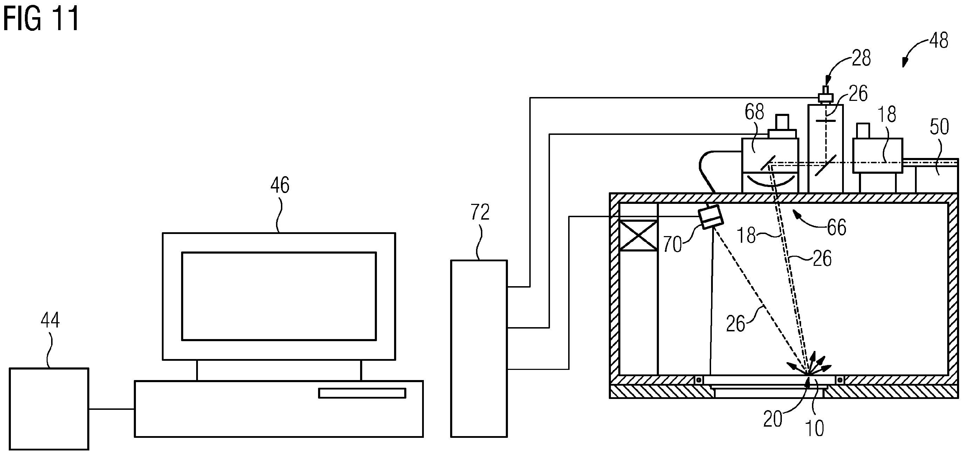

Die abgegebene elektromagnetische Strahlung 24, 26 wird mittels Strahlungssensoren 28, 70 (FIG 11) erfasst, die in FIG 1 jedoch nicht dargestellt sind. Die Strahlungssensoren 28, 70 können unter anderem Pyrometer, Fotodioden, CMOS-Sensoren und/oder dergleichen umfassen.

Die abgegebene elektromagnetische Strahlung 24, 26, insbesondere die abgegebene elektromagnetische Strahlung 26, kann dazu genutzt werden, die Qualität der hergestellten Schicht 16 zu überwachen, weil sich mit einer geeigneten Sensorik Rückschlüsse zum Beispiel auf eine Schmelzbadgröße, eine Wärmeabfuhr und/oder dergleichen ziehen lassen. Zu diesem Zweck sind die Strahlungssensoren 28, 70 an eine Steuereinrichtung 46 angeschlossen, wobei die Strahlungssensoren 28, 70 entsprechende Sensorsignale 30 für die Steuereinrichtung 46 bereitstellen.

Die Steuereinrichtung 46 ist vorliegend ein Teil der Herstellvorrichtung 48 und wertet die Sensorsignale 30 aus. Zu diesem Zweck ist die Steuereinrichtung 46 an den bestimmten Werkstoff und den wenigstens einen Betriebsparameter angepasst eingestellt. Als vorgegebene Betriebsparameter sind vorliegend die Laserleistung sowie die Scangeschwindigkeit vorgesehen. Darüber hinaus können natürlich auch weitere Betriebsparameter berücksichtigt werden.

FIG 2 und 3 zeigen für unterschiedliche Strahlungssensoren 28, 70 beispielhaft Ergebnisse der Auswertung der jeweiligen Sensorsignale 30, wobei FIG 2 einen Strahlungssensor für sichtbares Licht nutzt, wohingegen gemäß FIG 3 der dort vorgesehene Strahlungssensor Licht gemäß dem nahen Infrarotbereich detektiert. Bei dem Auswerten der Sensorsignale 30 kann vorgesehen sein, dass die Steuereinrichtung 46 die reflektierte Strahlung 24 von der vom Schmelzbad abgegebenen Strahlung 26 unterscheiden kann und dies bei der Auswertung entsprechend berücksichtigen. Sind jedoch die Strahlungssensoren 28, 70 wie vorliegend für die Laserstrahlung selbst nicht sensitiv, braucht dies von der Steuereinrichtung 46 nicht berücksichtigt zu werden.

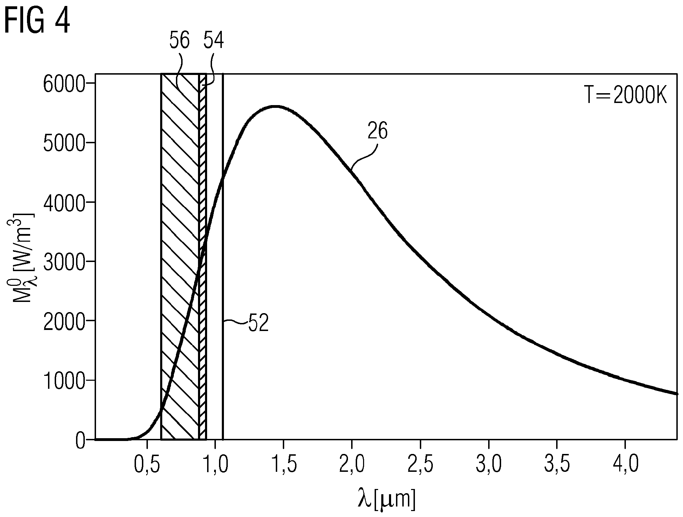

FIG 4 zeigt in einer schematischen Diagrammdarstellung in einem Strahlungs-Wellenlängen-Diagramm die Verhältnisse in Bezug auf unterschiedliche Strahlungssensoren 28, 70. Mit 26 ist ein Graph in FIG 3 dargestellt, der die aus dem Bereich 20 abgegebene elektromagnetische Strahlung 26 darstellt. Die Abszisse ist der Wellenlänge in µm und die Ordinate ist der spektralen spezifischen Abstrahlung in W/m³ zugeordnet. Ein Graph 52 ist dem durch die Laserquelle 50 bereitgestellten Energiestrahl 18 zugeordnet. Zu erkennen ist, dass die Laserquelle 50 die Energie im Wesentlichen ausschließlich bei einer Wellenlänge von etwa 1,1 µm abgibt.

Mit den Graphen 54 und 56 sind Detektionsbereiche zweier unterschiedlicher Strahlungssensoren dargestellt, wobei der Strahlungssensor gemäß dem Graphen 54 im Bereich des nahen Infrarot sensitiv ist, wobei der Strahlungssensor gemäß dem Graphen 56 einem Strahlungssensor zugeordnet ist, der im sichtbaren Bereich sensitiv ist.

Aus FIG 4 ist ersichtlich, dass die Sensitivität der Strahlungssensoren 28, 70 vorzugsweise derart gewählt ist, dass sie für den Energiestrahl 18 im Wesentlichen nicht sensitiv sind. Dadurch kann erreicht werden, dass reflektierte Strahlung 24 durch Strahlungssensoren 28 im Wesentlichen nicht detektiert wird und somit die Sensorsignale 30 im Wesentlichen nicht beeinflusst. In diesem Fall braucht die Steuereinrichtung 46 daher keine entsprechende Auswertung vorzunehmen, die die reflektierte Strahlung 24 von der durch das Schmelzbad abgegebenen Strahlung 26 zu unterscheiden vermag.

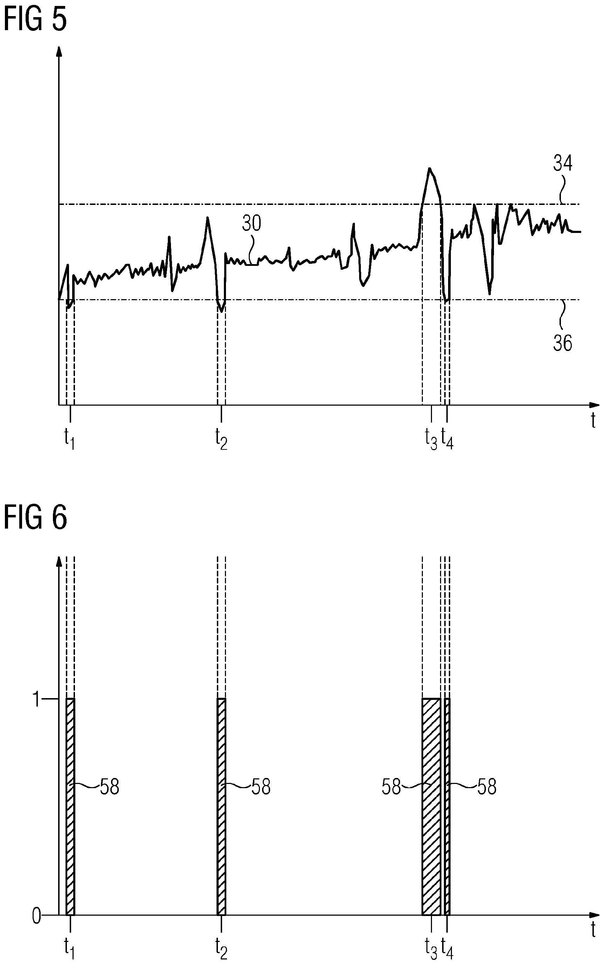

FIG 5 zeigt in einer weiteren schematischen Diagrammdarstellung ein Spannungs-Zeit-Diagramm, in dem ein Signalverlauf eines der Sensorsignale 30 während des Herstellens der Schicht 16 dargestellt ist. Eine Abszisse ist der Zeit zugeordnet, wohingegen eine Ordinate der Spannung zugeordnet ist. Das Sensorsignal 30 ist vorliegend ein Spannungssignal. Ferner sind in FIG 5 ein erster oberer Prozessvergleichswert 34 und ein erster unterer Prozessvergleichswert 36 dargestellt.

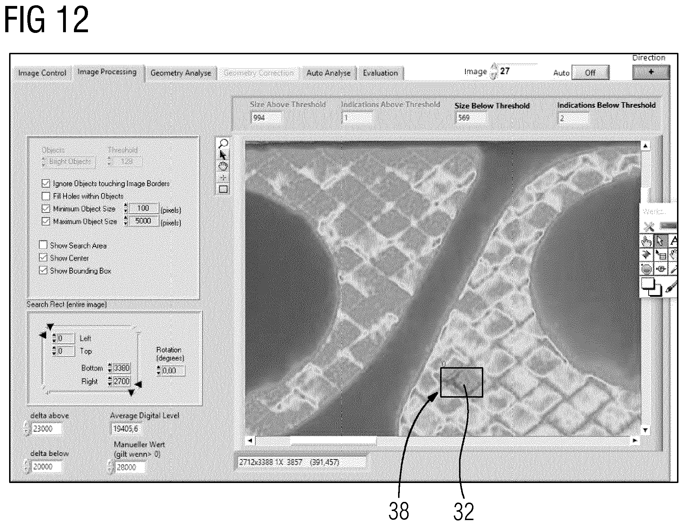

Zu erkennen ist in FIG 5, dass in Zeitbereichen t1, t2, t3, t4 Werte des Sensorsignals 30 größer als der erste obere Prozessvergleichswert 34 (t3) und kleiner als der erste untere Prozessvergleichswert 36 (t1, t2, t4) ist. Eine entsprechende Vergleichsoperation wird durch die Steuereinrichtung 46 ausgeführt. Ein Ergebnis des Vergleichs zeigt FIG 6 in einer schematischen Diagrammdarstellung, bei der die Abszisse der von FIG 5 entspricht und die Ordinate den digitalen Werten 0 und 1 zugeordnet ist. Anhand eines Graphen 58 ist erkennbar, wann das Sensorsignal 30 den die Prozessvergleichswerte 34, 36 bestimmten Bereich verlässt. Die Prozessvergleichswerte 34, 36 definieren ein Toleranzband, in dem sich das Sensorsignal 30 befinden soll, um einen Defekt 32 auszuschließen (FIG 12).

Anhand von FIG 6 ist es der Steuereinrichtung 46 also möglich, einen Defekt 32 in der Schicht 16, wenn der Werkstoff erstarrt ist, zu ermitteln.

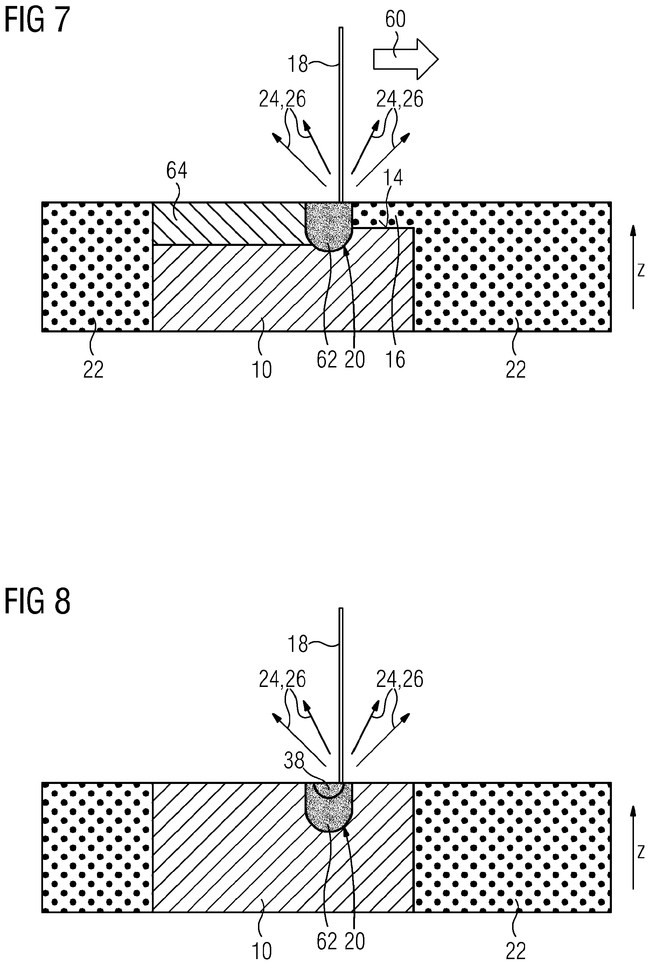

Der normale Prozess des Herstellens des Bauteils 10 ist schematisch detaillierter in FIG 7 dargestellt. Zu erkennen ist, dass auf die Oberfläche 14 des Bauteils 10 eine Schicht 16 aus dem pulverförmigen Werkstoff 22 aufgebracht ist. Durch Einwirken des Energiestrahls 18, der vorliegend gemäß der Scangeschwindigkeit in eine Richtung 60 geführt wird, wird lokal ein Schmelzbad 62 erzeugt, durch welches der pulverförmige Werkstoff 22 verflüssigt wird. Mit Weiterführen des Energiestrahls 18 in die Richtung 60 kühlt das Schmelzbad 62 ab und es verbleibt erstarrter Werkstoff 64, der eine neue Oberfläche des Bauteils 10 bildet.

Das Schmelzbad 62 ist in der Regel mehr als eine einzige Schichtdicke der Schicht 16 tief und kann sich über mehrere Schichtdicken von Schichten 16 erstrecken. Das unter der Oberfläche 14 positionierte, bereits verfestige Material kann dabei dann umgeschmolzen werden. Bei Weiterführung des Energiestrahls 18 erstarrt die auf diese Weise hergestellte Schmelze.

Mit dem vorliegenden Verfahren sind Scangeschwindigkeiten für den Energiestrahl 18 von etwa 1000 mm pro Sekunde möglich. Vorliegend ist der Energiestrahl 18 ein Laserstrahl, der einen Durchmesser von etwa 80 bis 100 µm aufweisen kann. Natürlich können bedarfsweise hier auch andere Durchmesser vorgesehen sein.

Eine Dicke der Schicht 16 kann beispielsweise etwa 40 µm betragen. Sie kann vorzugsweise in einem Bereich von 10 µm bis etwa 80 µm oder sogar zwischen 5 µm und 120 µm gewählt sein. Das Schmelzbad 62 kann eine Durchmesser von etwa 60 bis 80 µm aufweisen. Je nach Bedarf kann der Durchmesser jedoch auch größer sein und bis zu 200 oder sogar bis zu 250 µm betragen.

Wird nun - wie zuvor erläutert - ein Defekt 32 ermittelt, wird dieser Defekt 32 in einem Reparaturprozess im Rahmen eines Umschmelzens behoben. Zu diesem Zweck wird zunächst durch die Steuereinrichtung 46 ein Defektbereich 38 ermittelt. Sodann wird der Energiestrahl 18 zum den Defekt 32 umfassenden Defektbereich 38 geführt, sodass das Schmelzbad 62 lokal den Defektbereich 38 umfassend erzeugt wird. Dies ist anhand der schematischen Darstellung gemäß FIG 8 dargestellt. Nach Aufschmelzen des Defektbereichs 38 wird der Energiestrahl 18 entweder deaktiviert oder an eine weitere Bearbeitungsstelle geführt.

Wird also der Defekt 32 detektiert beziehungsweise ermittelt, so kann der betroffene Bereich, nämlich der Defektbereich 38 erneut aufgeschmolzen werden, um diesen Defekt 32 zu reparieren. Der Defekt 32 kann zum Beispiel ein Bindefehler oder dergleichen sein.

Um nun eine zuverlässige Prozessführung bezüglich des Reparaturprozesses erreichen zu können, sollten die folgenden Aspekte berücksichtigt werden:
- Der Reflexionsgrad des erstarrten Werkstoffs 64 kann größer als der des pulverförmigen Werkstoffs 22 sein, wodurch die abgegebene elektromagnetische Strahlung 24, 26 beeinflusst wird.
- Ein Wärmehaushalt kann beim Umschmelzen des erstarrten Werkstoffs 64 anders als beim pulverförmigen Werkstoff 22 sein.
- Es kann isoliert im Defektbereich 38 des Bauteils 10 gearbeitet werden, unter Umständen auch mit angepassten Führungsstrategien für den Energiestrahl 18, beispielsweise spiralförmig oder dergleichen.

Durch diese spezifischen Randbedingungen kann sich die Strahlungsleistung bei Durchführung des Reparaturprozesses somit signifikant von der beim Aufbauprozess beziehungsweise beim normalen Prozess unterscheiden, auch wenn dieselben Betriebsparameter wie Laserleistung, Scangeschwindigkeit, Abstand von Vektoren und/oder dergleichen genutzt werden.

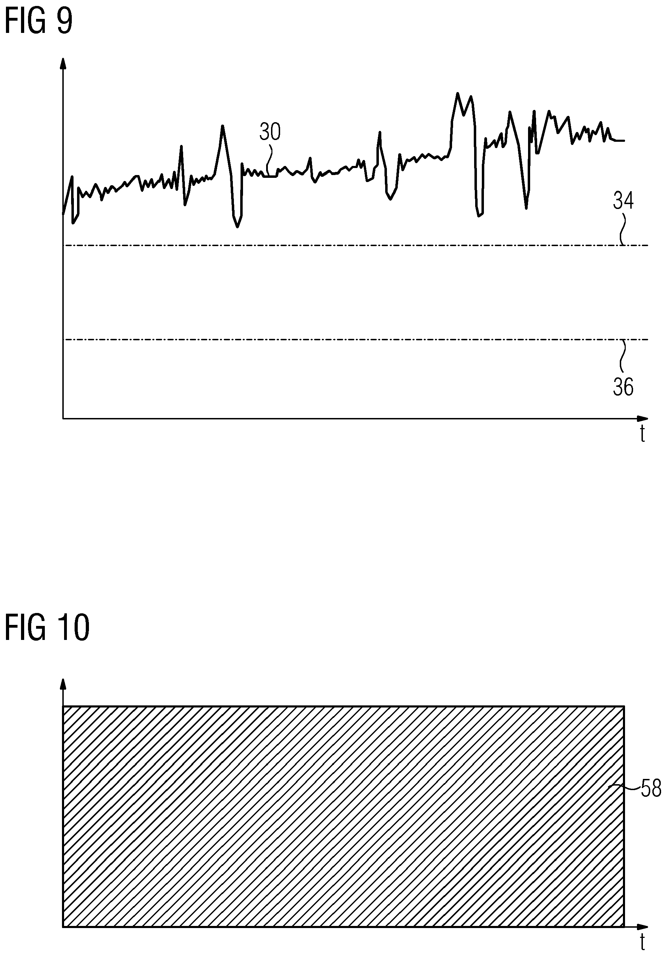

Würden beim Reparaturprozess die erste obere Prozessgrenze und die erste untere Prozessgrenze wie beim normalen Prozess genutzt, würde sich ein Signalverlauf gemäß dem schematischen Diagramm der FIG 9 ergeben, welches dem Diagramm gemäß FIG 5 entspricht. Entsprechend würde sich ein Graph 58 gemäß dem Diagramm gemäß FIG 10 ergeben, welches dem Diagramm der FIG 6 entspricht. Dies ist für die Überwachung einer zuverlässigen Reparatur jedoch ungeeignet.

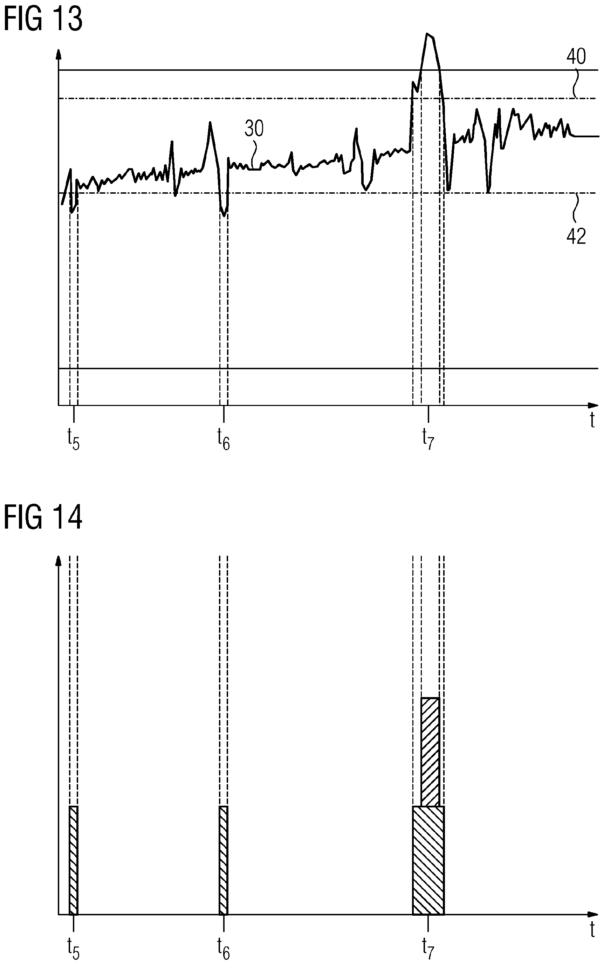

FIG 13 zeigt nun in einer schematischen Diagrammdarstellung wie FIG 5, dass ein zweiter oberer Prozessvergleichswert 40 und ein zweiter unterer Prozessvergleichswert 42 für die Durchführung eines zweiten Vergleichs durch die Steuereinrichtung 46 bereitgestellt werden, die für die Durchführung des Reparaturprozesses aktiviert werden. Zu erkennen ist, dass der Signalverlauf des Sensorsignals 30 nunmehr durch die zweiten Prozessvergleichswerte 40, 42 im Wesentlichen umfasst ist. Lediglich zu Zeitbereichen t5, t6, t7 sind Ausreißer aus dem durch die zweiten Prozessvergleichswerte 40, 42 gebildeten Toleranzband ersichtlich. Daraus ergibt sich, dass auch beim erstarrten Werkstoff 64 zuverlässig Defekte 32 ermittelt werden können.

FIG 11 zeigt in einer schematischen Darstellung einen Aufbau einer Herstellvorrichtung 48 zum Herstellen des Bauteils 10 gemäß einem SLM-Prozess. Eine Laserquelle 50 stellt den Energiestrahl 18 als Laserstrahl bereit, der über eine optische Einheit 66 zur Oberfläche 14 des Werkstücks 10 geführt wird. Mittels einer Scaneinheit 68 wird der Energiestrahl 18 in gewünschter Weise über die Oberfläche 14 des Bauteils geführt, um in vorgegebener Weise die Schicht 16 umzuschmelzen, sodass sie mit dem Bauteil 10 verbunden werden kann. Hierdurch können vorgegebene Strukturen erzeugt werden.

Ferner ist ein erster Strahlungssensor 28 vorgesehen, der die elektromagnetische Strahlung 26 erfassen kann. Ein zweiter Strahlungssensor 70 ist versetzt hierzu angeordnet und kann ebenfalls die elektromagnetische Strahlung 26 erfassen. Dadurch kann die elektromagnetische Strahlung 26 in unterschiedlichen Winkeln zueinander erfasst werden. Die Strahlungssensoren 28, 70 sind ebenso wie die Scaneinheit 68 über eine Maschinenschnittstelle 72 an die Steuereinrichtung 46 angeschlossen. Ferner ist vorliegend eine Datenbank 44 an die Steuereinrichtung 46 angeschlossen.

FIG 12 zeigt in einer schematischen Darstellung, wie ein Defekt 32 im Defektbereich 38 des Bauteils 10 durch die Steuereinrichtung 46 ermittelt wird. Ist die Position des Defekts 32 und des Defektbereichs 38 ermittelt, kann ein entsprechender Reparaturprozess durchgeführt werden.

Die Ausführungsbeispiele dienen ausschließlich der Erläuterung der Erfindung und sollen diese nicht beschränken.

## Patentansprüche

1. Verfahren zum Herstellen eines Bauteils (10), bei dem:
- auf eine von einer Aufbauzone (12) umfassten Oberfläche (14) des Bauteils (10) oder eines Bauteilträgers eine Schicht (16) aus einem pulverförmigen Werkstoff (22) aufgebracht wird,
- ein Energiestrahl (18) abhängig von wenigstens einem vorgegebenen Betriebsparameter zumindest teilweise über die Oberfläche (14) geführt wird, um zumindest den pulverförmigen Werkstoff (22) der Schicht (16) in einem Bereich (20) des Energiestrahls (18) aufzuschmelzen, wobei der aufgeschmolzene Werkstoff nach Abklingen des Einwirkens des Energiestrahls (18) erstarrt,
- aufgrund des Einwirkens des Energiestrahls (18) auf den Werkstoff aus dem Bereich (20) abgegebene elektromagnetische Strahlung (26) mittels eines Strahlungssensors (28) erfasst wird,
- ein Sensorsignal (30) des Strahlungssensors (28) ausgewertet wird, um einen Defekt (32) des erstarrten Werkstoffs (64) zu ermitteln, zu welchem Zweck das Sensorsignal (30) in einem ersten Vergleich mit wenigstens einem ersten Prozessvergleichswert (34, 36) verglichen wird,
**dadurch gekennzeichnet, dass**
- der Werkstoff in einem den Defekt (32) umfassenden Defektbereich (38) mittels des Energiestrahls (18) aufgeschmolzen wird, zu welchem Zweck der wenigstens eine vorgegebene Betriebsparameter verändert wird,
- die von dem Defektbereich (38) abgegebene elektromagnetische Strahlung (26) mittels des Strahlungssensors (28) erfasst wird,
- für das erneute Aufschmelzen wenigstens ein zweiter Prozessvergleichswert (40, 42) vorgegeben wird, und
- das Sensorsignal (30) in einem zweiten Vergleich mit dem wenigstens einen zweiten Prozessvergleichswert (40, 42) verglichen wird, wobei abhängig von dem zweiten Vergleich ermittelt wird, ob der Defekt (32) behoben ist.

2. Verfahren nach Anspruch 1, **dadurch gekennzeichnet, dass** der erste und/oder der zweite Prozessvergleichswert einen oberen und einen unteren Prozessvergleichswert (34, 36, 40, 42) umfassen, wobei das Sensorsignal (30) sowohl mit dem oberen als auch mit dem unteren Prozessvergleichswert (34, 36, 40, 42) verglichen wird, um zu ermitteln, ob ein Wert des Sensorsignals (30) zwischen dem oberen und dem unteren Prozessvergleichswert (34, 36, 40, 42) ist.

3. Verfahren nach Anspruch 2, **dadurch gekennzeichnet, dass** ein kleinerer Wert des Sensorsignals (30) als der untere Prozessvergleichswert (36, 42) und/oder ein größerer Wert des Sensorsignals als der obere Prozessvergleichswert (34, 40) als Defekt (32) ermittelt wird.

4. Verfahren nach einem der vorhergehenden Ansprüche, **dadurch gekennzeichnet, dass** das Verfahren für jede Schicht (16) erneut durchgeführt wird.

5. Verfahren nach einem der vorhergehenden Ansprüche, **dadurch gekennzeichnet, dass** der wenigstens eine vorgegebene Betriebsparameter abhängig von dem Werkstoff verändert wird.

6. Verfahren nach einem der vorhergehenden Ansprüche, **dadurch gekennzeichnet, dass** der wenigstens eine vorgegebene Betriebsparameter abhängig von einer Differenz zwischen dem Prozessvergleichswert (34, 36, 40, 42) und einem Wert des Sensorsignals (30) verändert wird.

7. Verfahren nach einem der vorhergehenden Ansprüche, **dadurch gekennzeichnet, dass** der wenigstens eine vorgegebene Betriebsparameter abhängig von eine Dicke der Schicht (16) verändert wird.

8. Verfahren nach einem der vorhergehenden Ansprüche, **dadurch gekennzeichnet, dass** der wenigstens eine vorgegebene Betriebsparameter von einer Datenbank (44) bereitgestellt wird.

9. Verfahren nach einem der vorhergehenden Ansprüche, **dadurch gekennzeichnet, dass** das Aufschmelzen des Defektbereichs (38) zu einem vorgegebenen Zeitpunkt und/oder abhängig von einem Fortschritt des Herstellens des Bauteils (10) erfolgt.

10. Steuereinrichtung (46) für eine Vorrichtung (50) zum Herstellen eines Bauteils (10), wobei die Steuereinrichtung (46) ausgebildet ist:
- das Aufbringen von einer Schicht (16) aus einem pulverförmigen Werkstoff (22) auf eine von einer Aufbauzone (12) umfassten Oberfläche (14) des Bauteils (10) oder eines Bauteilträgers durch eine Aufbringvorrichtung zu steuern,
- das Führen eines Energiestrahls (18) zumindest teilweise über die Oberfläche (14) mittels einer Energiestrahlvorrichtung (50) abhängig von wenigstens einem vorgebbaren Betriebsparameter zu steuern, um zumindest den pulverförmigen Werkstoff (22) der Schicht (16) im Bereich (20) des Energiestrahls (18) aufzuschmelzen, wobei der aufgeschmolzene Werkstoff nach Abklingen des Einwirkens des Energiestrahls (18) erstarrt,
- aufgrund des Einwirkens des Energiestrahls (18) auf den Werkstoff aus dem Bereich (20) abgegebene elektromagnetische Strahlung (26) mittels eines Strahlungssensors (28) zu erfassen,
- ein Sensorsignal (30) des Strahlungssensors (28) auszuwerten, um einen Defekt (32) des erstarrten Werkstoffs (64) zu ermitteln, zu welchem Zweck die Steuereinrichtung (46) ausgebildet ist, das Sensorsignal (30) in einem ersten Vergleich mit wenigstens einem ersten Prozessvergleichswert (34, 36) zu vergleichen,
**dadurch gekennzeichnet, dass**
die Steuereinrichtung (46) ferner ausgebildet ist,
- den Werkstoff in einem den Defekt (32) umfassenden Defektbereich (38) mittels des Energiestrahls (18) aufzuschmelzen, zu welchem Zweck der wenigstens eine vorgegebene Betriebsparameter verändert wird,
- die von dem Defektbereich (38) abgegebene elektromagnetische Strahlung (26) mittels des Strahlungssensors (28) zu erfassen,
- für das erneute Aufschmelzen wenigstens einen zweiten Prozessvergleichswert (40, 42) vorzugeben, und
- das Sensorsignal (30) in einem zweiten Vergleich mit dem wenigstens einen zweiten Prozessvergleichswert (40, 42) zu vergleichen, um abhängig von dem zweiten Vergleich zu ermitteln, ob der Defekt (32) behoben ist.
